# EUROPEAN PATENT APPLICATION

(11) **EP 3 623 957 A1**
(43) Date of publication of application: **18.03.2020**
(21) Application number: 17926304.1
(22) Date of filing: 20.12.2017
(51) Int. Cl.: G06F 16/00

(54) **GENERATION OF POINT OF INTEREST COPY**

(30) Priority: 21.09.2017 CN 201710862104
(71) Applicant: Beijing Sankuai Online Technology Co., Ltd, Beijing 100080 (CN)
(72) Inventor: ZHANG, Hua, Beijing 100080 (CN); DING, Changlin, Beijing 100080 (CN); CHEN, Hongsheng, Beijing 100080 (CN)
(74) Representative: Kraus & Weisert Patentanwälte PartGmbB
(86) International application number: PCT/CN2017/117428
(87) International publication number: WO 2019/056628

(57) **Abstract**

The present application provides a method and an apparatus for generating POI copy. According to an example of the method, after POI information for generating copy is obtained, topic trend prediction may be performed on the POI information to determine a topic word of the POI information, and POI copy corresponding to the POI information is generated based on the topic word.

## Description

### CROSS-REFERENCE TO RELATED APPLICATIONS

The present application claims priority to Chinese Patent Application No. 201710862104.7, entitled "METHOD AND APPARATUS FOR GENERATING POI COPY AND ELECTRONIC DEVICE" and filed on September 21, 2017, which is incorporated by reference in its entirety.

### TECHNICAL FIELD

The present application relates to generating point of interest (POI) copy.

### BACKGROUND

POI copy is generated and presented to convey key information of a POI to effectively increase click-through rates and purchase rates of users. This practice is widely applied to product presentation or trading platforms. However, it is expensive to hire people to write the POI copy. As POIs proliferate, it is increasingly difficult to write the POI copies timely. In addition, copy extraction efficiency can be improved when POI copy is automatically extracted from related description information of a POI. However, because related description text can only be extracted from the related description information of the POI, obtained copy may have low expression accuracy for the POI.

### SUMMARY

Embodiments of the present application provide a method of generating POI copy, to at least partially overcome one or more of the foregoing deficiencies.

According to a first aspect, an embodiment of the present application provides a method of generating POI copy. The method includes: obtaining POI information; performing topic trend prediction on the POI information to determine a topic word of the POI information; and generating, based on the topic word, POI copy corresponding to the POI information.

According to a second aspect, an embodiment of the present application provides an apparatus for generating POI copy. The apparatus includes: a POI information obtaining module, configured to obtain POI information; a topic word determining module, configured to perform topic trend prediction on the POI information to determine a topic word of the POI information; and a copy generating module, configured to generate, based on the topic word, POI copy corresponding to the POI information.

According to a third aspect, an embodiment of the present application provides an electronic device, including a memory, a processor, and computer programs stored in the memory and executable by the processor, where the computer programs are executed by the processor to implement the method of generating POI copy described in the embodiments of the present application.

According to a fourth aspect, an embodiment of the present application provides a computer-readable storage medium, storing computer programs, where the programs are executed by a processor to implement the method of generating POI copy described in the embodiments of the present application.

By means of the method and apparatus for generating POI copy disclosed by the embodiments of the present application, after POI information is obtained, topic trend prediction may be performed on the POI information to determine a topic word of the POI information, and POI copy corresponding to the POI information is generated based on the topic word, so that the expression ability and expression accuracy of the obtained copy for a POI can be effectively improved. The topic trend prediction is performed on the POI information, and the predicted topic word is used as input text for generating copy, so that a data range of the input text for generating copy can be effectively reduced, the input text for generating copy is more pertinent, and the accuracy and expression ability of the generated copy can be effectively improved. In addition, the topic word is automatically extracted, so that copy generation efficiency can be effectively improved.

### BRIEF DESCRIPTION OF THE DRAWINGS

To describe the technical solutions in the embodiments of the present application more clearly, the following briefly introduces the accompanying drawings required for describing the embodiments or the related art. Apparently, the accompanying drawings in the following description show merely some embodiments of the present application, and a person of ordinary skill in the art may still derive other drawings from these accompanying drawings without creative efforts.
FIG. 1 is a flowchart of a method of generating POI copy according to an embodiment of the present application.
FIG. 2 is a flowchart of a method of generating POI copy according to another embodiment of the present application.
FIG. 3 is a schematic structural diagram of a deep convolutional neural network model according to an embodiment of the present application.
FIG. 4 is a schematic structural diagram of an apparatus for generating POI copy according to an embodiment of the present application.
FIG. 5 is a schematic structural diagram of an apparatus for generating POI copy according to another embodiment of the present application.
FIG. 6 is a schematic structural diagram of an apparatus for generating POI copy according to a still embodiment of the present application.

### DETAILED DESCRIPTION OF THE EMBODIMENTS

The following clearly and completely describes the technical solutions in the embodiments of the present application with reference to the accompanying drawings in the embodiments of the present application. Apparently, the described embodiments are some embodiments of the present application rather than all of the embodiments. All other embodiments obtained by a person of ordinary skill in the art based on the embodiments of the present application without creative efforts shall fall within the protection scope of the present application.

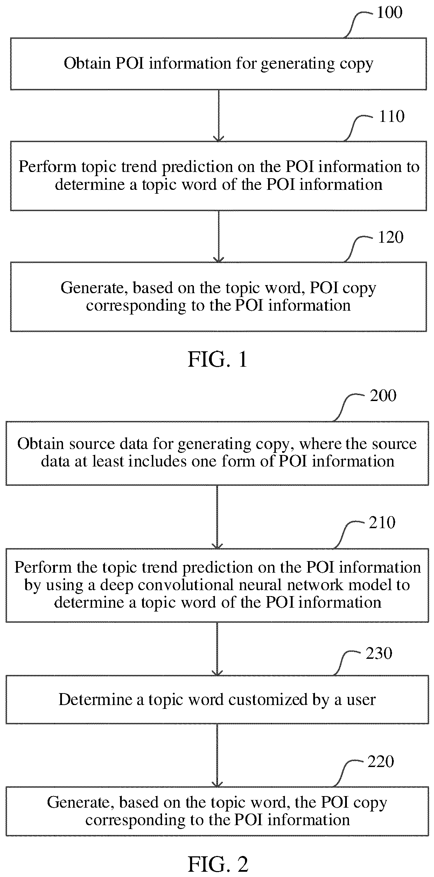

The present application discloses a method of generating POI copy. As shown in FIG. 1, the method may include step 100 to step 120.

At step, 100, POI information is obtained.

A POI is given different actual meanings on different platforms. For example, the POI may be a tourist attraction, a dish or a product and the like. There may be various forms of POI information, for example, POI information in graphic form and POI information in text form. Different forms of POI information may present information about different dimensions of the POI. For example, the POI information in graphic form may be used to present an image such as a first image of the POI. The POI information in text form may be used to present information such as a name, a description, and a comment of the POI.

The POI information is source data for generating the POI copy. The generation of copy on a dish is used as an example. Obtained source data for generating copy may include information such as an image, a name, a taste, an ingredient description, and a user comment of the dish.

At step 110, topic trend prediction is performed on the POI information to determine a topic word of the POI information.

POI information in text form may be first identified as a real vector by using a bag-of-words model to extract a feature of POI information in text form, and a feature of POI information in graphic form is extracted by using a feature extraction method. Next, the features of different forms of the POI information are fused to obtain a combined feature expression of the POI information. Finally, a pre-trained neural network model, for example, a support vector machine (SVM) classification model is used to determine a topic word corresponding to an obtained combined feature of the POI information as the topic word of the POI information.

In this embodiment of the present application, the neural network model may be pre-trained, and any one or more pieces of the POI information such as a first image, a name, a comment, and a description are then input into the neural network model, so that the neural network model performs feature extraction on the POI information and determines the topic word, so as to complete the topic trend prediction and output the topic word of the POI information.

At step 120, POI copy corresponding to the POI information is generated based on the topic word.

A method similar to a machine translation method may be used to generate the copy corresponding to the POI information based on the topic word. A deep neural network model, for example, an encoder-decoder-based deep neural network model, may be pre-trained by using a deep learning method. The encoder-decoder-based deep neural network model may be configured to use a topic word output by a deep convolutional neural network model as an input to generate copy corresponding to POI information input into the deep convolutional neural network model.

An encoder-decoder-based neural network model, for example, an attention mechanism-based sequence to sequence (seq2seq) deep neural network model, may be used. During model training, a possible topic word sequence may be used as an input, and corresponding copy is then used as an output to train the seq2seq deep neural network model. For example, a format of training data for training the encoder-decoder-based deep neural network model may be [input: topic word sequence; output: copy]. The topic word may be text.

The seq2seq deep neural network model has made great progress in the fields of machine translation and natural language processing. Based on a Bayesian conditional probability formula, seq2seq is formed by one encoder and one decoder. The encoder may encode a source sequence A into a feature vector with a fixed length. The vector is transmitted to the decoder as an input to obtain a target sequence B. Two attention mechanisms are mainly used. One is an additive attention mechanism proposed by Bahdanau, and the other is a multiplicative attention mechanism proposed by Luong. An attention mechanism-based seq2seq model has the following characteristics: An encoding end uses a bidirectional recurrent neural network (or a variant of the bidirectional recurrent neural network) to encode and represent an input sequence, so that entire context can be adequately modeled and represented. An attention mechanism is used to adequately use words in a target sequence and alignment information of words in an input sequence. Because of a temporal dependence characteristic (that is, a subsequent output is correlated to all previous inputs) of the model, a backpropagation algorithm may be used for the learning of the model. For a specific implementation of training the seq2seq deep neural network model, refer to related technologies well known to a person skilled in the art. This is not described herein again.

After the topic word of the POI information is determined, the topic word may be spliced into a text sequence to be input into the encoder-decoder-based deep neural network model, so that the encoder-decoder-based deep neural network model outputs corresponding copy.

By means of the method of generating POI copy disclosed by this embodiment of the present application, after POI information for generating copy is obtained, topic trend prediction is performed on the POI information to generate a topic word of the POI information, and POI copy corresponding to the POI information is generated based on the topic word, so that the expression ability and expression accuracy of the obtained copy for a POI can be effectively improved. In addition, the topic trend prediction is performed on the POI information to obtain the topic word, and the topic word is used as input text for generating copy, so that a data range of input text for generating copy can be effectively reduced, and the accuracy and expression ability of the generated copy can be improved. In addition, the topic word is automatically extracted, so that copy generation efficiency can be effectively improved.

As shown in FIG. 2, a method of generating POI copy disclosed in another embodiment of the present application may include step 200 to step 230.

At step 200, POI information for generating copy is obtained.

For a specific implementation of obtaining the POI information for generating copy, refer to the foregoing content. This is not described herein again.

After the POI information for generating copy is obtained, topic trend prediction may be performed on the POI information to determine a topic word of the POI information. Next, POI copy corresponding to the POI information may be generated based on the topic word. Different neural network models may be used to separately extract a topic word and generate copy. For example, the step of performing topic trend prediction on the POI information to determine a topic word of the POI information may include: performing the topic trend prediction on the POI information by using a first neural network model to determine the topic word of the POI information. The step of generating, based on the topic word, POI copy corresponding to the POI information may include: generating, based on the topic word by using a second neural network model, the POI copy corresponding to the POI information.

At step 210, the topic trend prediction is performed on the POI information by using the first neural network model to determine the topic word of the POI information.

In this embodiment of the present application, first, the first neural network model may be trained.

It is assumed that both topics of one POI need to be determined. For example, the two topics are whether a 24-7 service is offered and whether the environment is pleasant. Therefore, either topic involves a binary classification problem with a yes-or-no answer. For example, as for "whether a 24-7 service is offered", the service is either a 24-7 service or not a 24-7 service. If a plurality of topics related to the POI need to be determined, a plurality binary classification problems need to be solved. Therefore, to solve all the binary classification problems in one model to predict different topics of a POI together, a multi-target classification model that can solve a multi-target classification problem may need to be used. In this embodiment of the present application, the first neural network model for performing the topic trend prediction may be a deep convolutional neural network-based multi-target classification model.

The POI information may be used as an input, a topic word sequence corresponding to the POI information is used as an output, and a convolutional neural network-based multi-target classification model is trained based on training data formed by the input and the output. A format of the training data may be [input: image, text sequence; output; topic word sequence]. The POI information may include an image and a text sequence. A backpropagation algorithm may be used to train the deep convolutional neural network model with the training data.

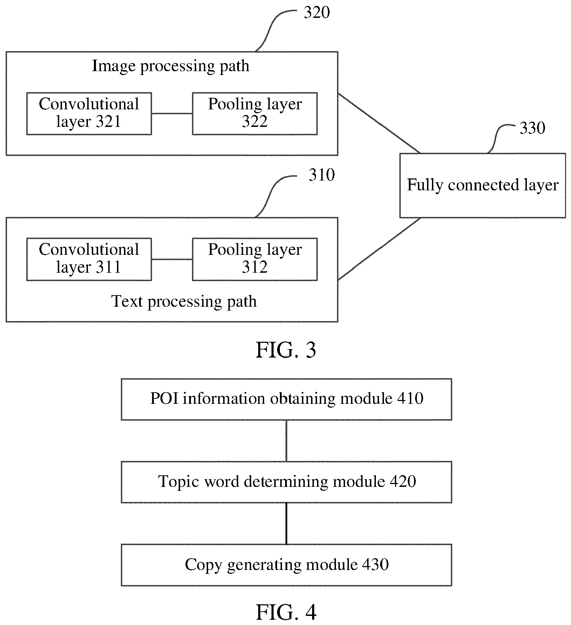

The deep convolutional neural network model may include at least one data processing path, for example, a text processing path or an image processing path. As shown in FIG. 3, the data processing path may include a text processing path 310 and an image processing path 320. Each data processing path is an independent convolutional module and is used to process different forms of POI information. For example, the text processing path 310 is used to process POI information in text form, for example, POI information such as a name, a description, and a comment. The image processing path 320 is used to process POI information in graphic form, for example, a first image of a POI. The two data processing path may be separately trained. For example, the image processing path 320 is trained by using input images, and the text processing path 310 is trained by using input text sequences. The deep convolutional neural network model may be trained by using a deep convolutional neural network model training method well known to a person skilled in the art. This is not described herein again.

During the extraction of a copy on a POI, POI information such as any one or more of a first image, a name, a comment, and a description of the POI may be used as an input of the deep convolutional neural network model. For example, the POI information is organized into the form of [input: image, text sequence] and then input into the deep convolutional neural network model. The deep convolutional neural network model performs topic trend prediction on the POI information and outputs at least one topic word corresponding to the POI information.

The step of performing the topic trend prediction on the POI information by using a first neural network model to determine the topic word of the POI information may include: separately determining features of different forms of the POI information; fusing the features of the different forms of the POI information to determine a combined feature of the POI information; and mapping the combined feature into the topic word of the POI information by using the first neural network model. The different forms of POI information may include POI information in text form and/or POI information in graphic form.

For example, each data processing path in the deep convolutional neural network model (that is, the first neural network model) may perform the topic trend prediction on a corresponding form of POI information to separately extract features of the form of POI information. For example, POI information of a dish includes an image, a name, and a description of the dish. The deep convolutional neural network model may allocate the image of the dish to the image processing path for processing and allocate the text of the name and the description of the dish to the text processing path for processing.

The image processing path may use a network structure in which two-dimensional convolution and maximum pooling are alternately stacked, for example, use a vggl6 convolutional neural network and a model pre-trained by using an ImageNet data set. After the input image of the dish is processed by the image processing path, a real vector V1 may be obtained to represent a feature of the input image of the dish, that is, a feature of the POI information in graphic form. In the convolutional neural network, a convolutional layer is used to extract a feature of a partial area, and each filter is equivalent to a feature extractor. When a plurality of features need to be extracted, a plurality of filters (which may also be referred to as convolutional kernels) may be used. An output, that is, a vector, a matrix, a tensor or the like obtained and extracted by each feature extractor may be referred to as feature mapping. In addition, each filter may use a same set of weights for all input data. This is another important property "weight sharing" of the convolutional layer. The property can significantly reduce a quantity of connections in the model. Although the convolutional layer can significantly reduce the quantity of connections, a quantity of nerve cells into which each feature is mapped that are obtained after a convolutional operation is not significantly reduced. In this case, if a classifier is connected next, the classifier still has many input dimensions, and overfitting may easily occur. To solve the problem, a pooling operation, that is, subsampling, is added next to the convolutional layer in the deep convolutional neural network model of the present application, to form a subsampling layer. The subsampling layer can greatly reduce the quantity of dimensions of the features, thereby avoiding overfitting.

The text processing path may use a network structure with one layer of one-dimensional convolution and one layer of maximum pooling. After the input text of the name and the description of the dish is processed, another real vector V2 is obtained to represent a feature of the input text of the name and the description of the dish, that is, a feature of the POI information in text form.

Next, the features of different forms of POI information may be fused to determine the combined feature of the POI information. For example, the image feature V1 obtained by the image processing path is a three-dimensional feature vector [1, 2, 3], and the text feature V2 obtained by the text processing path is a two-dimensional feature vector [4, 5]. The feature [1, 2, 3] of the POI information in graphic form and the feature [4, 5] of the POI information in text form are fused, so that a combined feature [1, 2, 3, 4, 5] of the POI information may be obtained through splicing.

Finally, a fully connected (FC) layer of the deep convolutional neural network model maps the combined feature into the topic word of the POI information. As shown in FIG. 3, there is an FC layer 330 after convolutional layers 311 and 321 and pooling layers 312 and 322 in the deep convolutional neural network model. The deep convolutional neural network model may include the deep convolutional neural network-based multi-target classifier. The FC layer is used as a "classifier" in the convolutional neural network. Operations of the convolutional layers and the pooling layers are performed to map source data into a hidden layer feature space, and the FC layer may map a "distributed feature" of the hidden layer feature space into a sample mark space, that is, an output space.

The FC layer 330 may predict a topic word list of the POI information according to the input combined feature of the POI information. Because the FC layer implements one multi-target classifier, each node of the layer is an independent binary classifier and may be activated by using sigmoid, and different nodes are independent of each other. Correspondingly, a final loss function of an entire network may use a cross entropy based on sigmoid. Based on this, the backpropagation algorithm may be used to learn the entire network. The FC layer may predict a topic word list corresponding to the POI information according to the combined feature of the POI information. For example, a topic word list of the POI information of the dish may be predicted according to the feature [1, 2, 3, 4, 5].

Each piece of POI information may correspond to a plurality of topic words, and the plurality of topic words may be output in the form of a topic word sequence.

Step 220: Generate, based on the topic word by using a second neural network model, the POI copy corresponding to the POI information.

The second neural network model may be an encoder-decoder-based deep neural network model.

For the generating, based on the topic word, the POI copy corresponding to the POI information, refer to the foregoing. This is not described herein again.

Optionally, as shown in FIG. 2, after step 220 of generating, based on the topic word by using a second neural network model, the POI copy corresponding to the POI information, the method may further include step 230. At the step 230, a topic word customized by a user is determined.

After user information is analyzed, a topic word related to an interest or a preference of the user may be extracted as the topic word customized by the user. Alternatively, a word for which a topic is manually described according to an actual requirement may be used as the topic word customized by the user.

When the topic word customized by the user is input into a system, the step of generating, based on the topic word, the POI copy corresponding to the POI information may include: generating, based on the topic word customized by the user and the topic word predicted according to the POI information, the POI copy corresponding to the POI information. In other words, the topic word predicted by the first neural network model and the topic word customized by the user may both be input into the second neural network model to generate the POI copy corresponding to the POI information. For example, it is assumed that the topic word determined by performing the topic trend prediction on the POI information by the deep convolutional neural network model is "clean environment, spicy taste", and the topic word customized by the user is "spicy taste". The topic word determined by performing the topic trend prediction on the POI information by the deep convolutional neural network model and the topic word customized by the user may be combined to obtain "clean environment, spicy taste" and "spicy taste" as an input of the encoder-decoder-based deep neural network model to generate the copy. In this way, the topic about the taste is reinforced, and the final copy better matches the preference of the user.

By means of the method for generating POI copy disclosed by this embodiment of the present application, after POI information is obtained, topic trend prediction may be performed on the POI information by using a first neural network model to determine a topic word of the POI information, and POI copy corresponding to the POI information is generated by combining a topic word customized by a user, so that the expression ability and expression accuracy of the obtained copy for a POI can be effectively improved.

Further, a topic word is flexibly added according to a requirement of the user, so that the topic word for generating copy better matches a preference of the user, thereby further improving a click-through rate of the POI. A plurality of data processing paths are set in a deep convolutional neural network model, and each data processing path corresponds to an independent convolutional module and can process various forms of POI information, so that the accuracy and expression ability of the generated copy can further be improved.

A topic word sequence of each POI may be directly used as an input of an encoder-decoder neural network to dominate the generation of the final copy or can be used to explain more intuitively a source of the generated copy. In addition, when a style of the final output copy from the encoder-decoder-based deep neural network model needs to be migrated, it is only necessary to train another encoder-decoder-based neural network model. In this way, styles of copy can be easily migrated, and flexible switching between various styles can be performed as required.

As shown in FIG. 4, an apparatus for generating POI copy according to an embodiment of the present application may include: a POI information obtaining module 410, configured to obtain POI information; a topic word determining module 420, configured to perform topic trend prediction on the POI information to determine a topic word of the POI information; and a copy generating module 430, configured to generate, based on the topic word, POI copy corresponding to the POI information.

The topic word determining module 420 is further configured to perform the topic trend prediction on the POI information by using a first neural network model to determine the topic word of the POI information. The first neural network model may be a deep convolutional neural network model, for example, a deep convolutional neural network-based multi-target classifier. In addition, the first neural network model may include a plurality of data processing paths, for example, a text processing path and/or an image processing path. The text processing path may use a network structure with one layer of one-dimensional convolution and one layer of maximum pooling. The image processing path may use a network structure in which two-dimensional convolution and maximum pooling are alternately stacked.

The copy generating module 430 may further be configured to generate, based on the topic word by using a second neural network model, the POI copy corresponding to the POI information. The second neural network model may be an encoder-decoder-based deep neural network model.

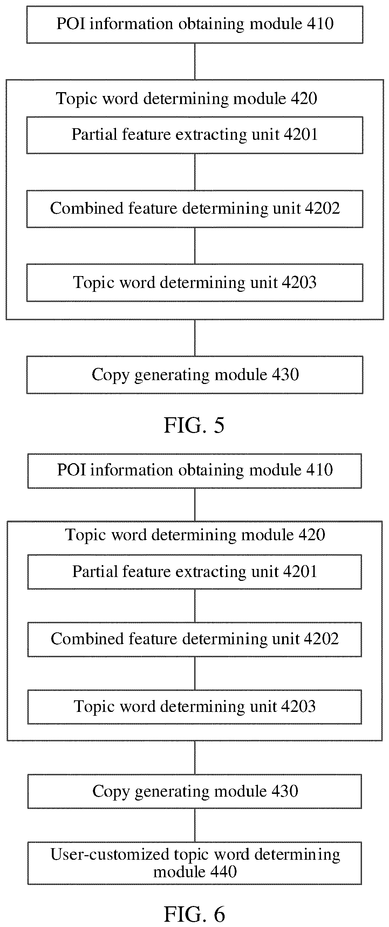

As shown in FIG. 5, the topic word determining module 420 may include: a partial feature extracting unit 4201, configured to separately determine features of different forms of the POI information; a combined feature determining unit 4202, configured to fuse the features of the different forms of POI information to determine a combined feature of the POI information; and a topic word determining unit 4203, configured to map the combined feature into the topic word of the POI information by using the first neural network model. The different forms of the POI information may include POI information in text form and/or POI information in graphic form.

By means of the apparatus for generating POI copy disclosed by this embodiment of the present application, after POI information is obtained, topic trend prediction may be performed on the POI information to determine a topic word of the POI information, and POI copy corresponding to the POI information is generated based on the topic word, so that the expression ability and accuracy of the obtained copy for a POI can be effectively improved. The topic trend prediction is performed on the POI information to obtain the topic word, and the topic word is used as input text for generating copy, so that a data range of the input text for generating copy can be effectively reduced, the input text for generating copy is more pertinent, and the accuracy and expression ability of the generated copy can further be improved. In addition, the topic word is automatically extracted, so that copy generation efficiency can be effectively improved.

A plurality of data processing paths are set in a deep convolutional neural network model, and each data processing path corresponds to an independent convolutional module and can process various forms of POI information, so that the accuracy and expression ability of the generated copy can further be improved.

A topic word sequence of each predicted POI may be directly used as an input of an encoder-decoder neural network to dominate the generation of the final copy or can be used to explain more intuitively a source of the generated copy. In addition, when a style of the final output copy from the encoder-decoder-based deep neural network model needs to be migrated, it is only necessary to train another encoder-decoder-based deep neural network model. In this way, styles of copy can be easily migrated, and flexible switching between various styles can be performed as required.

As shown in FIG. 6, based on the apparatus for generating POI copy shown in FIG. 5, an apparatus for generating POI copy disclosed by another embodiment of the present application may further include: a user-customized topic word determining module 440, configured to determine a topic word customized by a user. In this case, the copy generating module 430 may further be configured to generate, based on the topic word determined by the topic word determining module 420 and the topic word determined by the user-customized topic word determining module 440, the POI copy corresponding to the POI information.

By means of the apparatus for generating POI copy disclosed by this embodiment of the present application, a topic word is allowed to be flexibly added according to a requirement of the user, so that the topic word for generating copy better matches a preference of the user, thereby further improving a click-through rate of the POI.

Correspondingly, the present application further discloses an electronic device, including a memory, a processor, and computer programs stored in the memory and executable by the processor. The foregoing method of generating POI copy may be implemented by executing the computer programs by the processor. The electronic device may be a mobile terminal device, a smartphone, a navigator, a personal digital assistant, a tablet computer or the like.

The present application further discloses a computer-readable storage medium, storing computer programs. The programs are executed by a processor to implement the steps of the foregoing method of generating POI copy.

The embodiments in this specification are all described in a progressive manner. Description of each of the embodiments focuses on differences from other embodiments, and reference may be made to each other for the same or similar parts among respective embodiments. The apparatus embodiments are substantially similar to the method embodiments and therefore are only briefly described, and reference may be made to the method embodiments for the associated parts.

The method and apparatus for generating POI copy provided in the present application are described in detail above. The principle and implementation of the present application are described herein by using specific examples. The descriptions of the foregoing embodiments are merely used for helping understand the method and core ideas of the present application. In addition, a person of ordinary skill in the art can make variations in terms of the specific implementation and application scope according to the ideas of the present application. Therefore, the content of this specification shall not be construed as a limitation to the present application.

Through the description of the foregoing implementations, a person skilled in the art may clearly understand that the implementations may be implemented by software in combination with a necessary universal hardware platform, and may certainly be implemented by hardware. Based on such an understanding, the above technical solutions or the part that makes contributions to the related art may be implemented in a form of a computer software product. The computer software product may be stored in a computer-readable storage medium such as a read-only memory (ROM)/a random access memory (RAM), a magnetic disk or an optical disc, and contains several instructions for instructing computer equipment (which may be a personal computer, a server, network equipment, or the like) to perform the methods described in the embodiments or some parts of the embodiments.

## Claims

1. A method of generating point of interest (POI) copy, comprising:
obtaining POI information;
performing topic trend prediction on the POI information to determine a topic word of the POI information; and
generating, based on the topic word, POI copy corresponding to the POI information.

2. The method according to claim 1, wherein performing the topic trend prediction on the POI information to determine the topic word of the POI information comprises:
performing the topic trend prediction on the POI information by using a first neural network model to determine the topic word of the POI information; and
generating, based on the topic word, the POI copy corresponding to the POI information comprises:
generating, based on the topic word by using a second neural network model, the POI copy corresponding to the POI information.

3. The method according to claim 2, wherein performing the topic trend prediction on the POI information by using the first neural network model to determine the topic word of the POI information comprises:
separately determining features of different forms of the POI information;
fusing the features of the different forms of the POI information to determine a combined feature of the POI information; and
mapping the combined feature into the topic word of the POI information by using the first neural network model.

4. The method according to claim 3, wherein the different forms of the POI information comprise any one or more of the following:
POI information in text form; and
POI information in graphic form.

5. The method according to any one of claims 1 to 4, further comprising:
determining a topic word customized by a user.

6. The method according to claim 5, wherein generating, based on the topic word, the POI copy corresponding to the POI information comprises:
generating, based on the topic word customized by the user and the topic word predicted according to the POI information, the POI copy corresponding to the POI information.

7. An apparatus for generating a point of interest (POI) copy, comprising:
a POI information obtaining module, configured to obtain POI information;
a topic word determining module, configured to perform topic trend prediction on the POI information to determine a topic word of the POI information; and
a copy generating module, configured to generate, based on the topic word, POI copy corresponding to the POI information.

8. The apparatus according to claim 7, wherein
the topic word determining module is configured to perform the topic trend prediction on the POI information by using a first neural network model to determine the topic word of the POI information; and
the copy generating module is configured to generate, based on the topic word by using a second neural network model, the POI copy corresponding to the POI information.

9. The apparatus according to claim 6 or 7, further comprising a user-customized topic word determining module, wherein
the user-customized topic word determining module is configured to determine a topic word customized by a user; and
the copy generating module is configured to generate the POI copy corresponding to the POI information based on the topic word determined by the topic word determining module and the topic word determined by the user-customized topic word determining module.

10. An electronic device, comprising:
a memory,
a processor, and
computer programs stored in the memory and executable by the processor, wherein the computer programs are executed by the processor to implement the method of generating POI copy according to any one of claims 1 to 6.

11. A computer-readable storage medium, storing computer programs, wherein the programs are executed by a processor to implement the method of generating POI copy according to any one of claims 1 to 5.
